## Europäisches Patentamt

## European Patent Office

## Office européen des brevets

(19)

(11) Veröffentlichungsnummer: **0 068 436**
**A2**

(12) **EUROPÄISCHE PATENTANMELDUNG**

(21) Anmeldenummer: **82105527.4**

(22) Anmeldetag: **23.06.82**

(51) Int. Cl.³: **B 62 K 27/00**

(30) Priorität: **25.06.81 DE 3124916**

(43) Veröffentlichungstag der Anmeldung: **05.01.83**
Patentblatt 83/1

(84) Benannte Vertragsstaaten: **AT BE CH DE FR IT LI LU NL**

(71) Anmelder: **H. Wolfangel KG, Postfach 1540, D-7967 Bad Waldsee (DE)**

(72) Erfinder: **Wolfangel, Hermann, Postfach 1540, D-7967 Bad Waldsee (DE)**

(74) Vertreter: **Riebling, Günter Dr.-Ing., Dipl.-Ing., Ing.grad. et al, Rennerle 10, D-8990 Lindau (DE)**

(54) **Anhänger für Zweiradfahrzeuge.**

(57) Der Anhänger für Zweirad-Fahrzeuge besteht aus einem aus Rohren gefertigten Rahmen, der als Klapprahmen ausgebildet ist, der um Achsen klappbar ist, die parallel zu den Achsen der Laufräder verlaufen oder senkrecht dazu, und der in seiner Gebrauchslage in seiner Klapplage arretiert ist. Er weist eine mittig angeordnete Zugdeichsel und einen mit dem Rahmen lösbar verbindbaren Behälter auf. Das Gestell ist durch U-förmig gebogene Rohre 58,61 gebildet, die im Bereich der Achsen der Laufräder 6 gelenkig gelagert sind.

- 1 -

## Anhänger für Zweiradfahrzeuge

Die Erfindung betrifft einen Anhänger für Zweiradfahrzeuge, insbesondere Fahrräder, bestehend aus einem aus Rohren gefertigten Rahmen, an dem nebeneinander zwei Laufräder befestigt sind, ferner mit einer mittig angeordneten Zugdeichsel und mit einem mit dem Rahmen lösbar verbindbaren Behälter.

Einen solchen Anhänger beschreibt die DE-GM 8 024 888. Der Behälter ist dort mit dem Rahmen lösbar verbunden, um seine Zugänglichkeit und Handhabung zu verbessern. Dieser Anhänger hat aber den Nachteil, daß er - auch ohne den Behälter - verglichen mit dem Material des Anhängers, sehr viel Raum einnimmt. Dies beruht insbesondere darauf, daß der Rahmen etwa den Querschnitt des Behälters einnehmen muß, damit der Behälter auf den Rahmen aufgesetzt werden kann.

Die Erfindung vermeidet diese Nachteile. Ihr liegt die Aufgabe zugrunde, einen Anhänger für Zweiradfahrzeuge der eingangs genannten Art vorzuschlagen, bei dem eine raumsparende Zusammenlegung des Anhängers möglich ist.

Zur Lösung dieser Aufgabe ist die Erfindung dadurch gekennzeichnet, daß der Rahmen als Klapprahmen ausgebildet ist, der um Achsen klappbar ist, die parallel zu den Achsen der Laufräder verlaufen oder senkrecht dazu.

Der Anhänger kann somit sehr platzsparend zusammengefaltet werden, wie dies weiter unten noch näher erläutert wird, und zwar sowohl in eine Parkposition, in der er noch an das Zweiradfahrzeug angekuppelt ist, oder auch ganz zusammengefaltet zu Transportzwecken und dgl.. Hierfür bieten sich grundsätzlich drei Möglichkeiten an:

Entweder wird der Behälter um Achsen geklappt, die sich parallel zu den Achsen der Laufräder erstrecken, oder er wird um Achsen in Längsrichtung des Anhängers oder auch in lotrechter Richtung des Anhängers geklappt.

Der Behälter ist entweder als starres, kastenförmiges Teil, vorzugsweise aus Kunststoffmaterial, ausgebildet, der dann in den Rahmen eingehängt wird. Das Kunststoffteil ist vorzugsweise mit einem Deckel versehen, der am unteren Teil verschlossen werden kann.

Alternativ kann der Behälter auch durch Segeltuch oder ein anderes geeignetes, faltbares Material ausgebildet werden. Auch bei dieser Ausführungsform ist der Segeltuchbehälter in den Rahmen des Anhängers eingehängt.

Schließlich kann der Behälter auch durch Teile gebildet werden, die platzsparend zusammengesteckt oder ineinandergestellt werden können und die dann beim Rahmen verbleiben können. Aus diesen Einzelteilen des Behälters kann ein großer Behälter durch entsprechende Zwischenwände aufgebaut werden, die zwischen die Einzelteile gesteckt werden.

Wenn der Rahmen um Achsen klappbar ist, die sich parallel zu den Achsen der Räder erstrecken, wird es bevorzugt, wenn die Verbindung zwischen der Zugdeichsel und dem Rahmen als Gelenk ausgebildet ist. Hierbei kann die in einer Seitenansicht besonders weit über das Profil des Anhängers hinausstehende Zugdeichsel schon verkleinert werden und die erwähnte Parkposition kann hierbei erreicht werden.

Soll der Anhänger bei dieser Ausführungsform ganz flach gefaltet werden, so soll das Gestell durch U-förmige Rohre gebildet sein, die im Bereich der Achsen der Laufräder gelenkig gehalten sind. Es handelt sich hierbei um Rundprofil-Rohre, die jeweils zu einseitig offenen, U-förmigen Rahmenteilen gebogen sind. Der eine Schenkel ist hierbei an der einen und der andere Schenkel an der anderen Rahmenseite in der Nähe des Radträgers gelenkig gelagert.

Die Standsicherheit des Anhängers wird fühlbar erhöht, wenn die Zugdeichsel nach unten als teleskopierbarer, schwenkbarer Stützfuß verlängert ist. Trotz dieser Erhöhung der Stabilität wird durch die Schwenkbarkeit des Stützfußes die Faltbarkeit des gesamten Anhängers nicht behindert.

Statt der Anordnung eines einzelnen Stützfußes kann die Zugdeichsel als U-förmig gebogenes Rundrohr ausgebildet sein, dessen beide Seitenschenkel jeweils schwenkbar an einer Fahrzeugseite angreifen und dessen Basisschenkel parallel zum Erdboden auf den Erdboden aufsetzbar ist.

Es dient demselben Zweck, wenn die Zugdeichsel unterteilt ist und schwenkbar und/oder steckbar ist.

Sofern der Anhänger dadurch zusammengeklappt werden kann, daß seine Schwenkachsen lotrecht ausgebildet sind, wird es bevorzugt, wenn die Zugdeichsel als Mittelträger fortgesetzt ist, an den vordere und hintere, sich seitlich erstreckende Scherenarme mit lotrechten Schwenkachsen angelenkt sind. Über diese Scherenarme kann der Behälter flach gefaltet werden. Die zusammengefalteten Rahmenteile werden in dem starren Behälter eingelegt, der dann auf die Gepäckstützt des Fahrrades aufgelegt und festgeschnallt wird oder im Kofferraum eines Kraftfahrzeuges verstaut werden kann.

Bei der dritten Ausführungsform mit einer sich in Längsrichtung erstreckenden Schwenkachse des Anhängers wird es bevorzugt, wenn die Zugdeichsel als Mittelträger fortgesetzt ist, an den rechte und linke Bodenplatten schwenkbar angelenkt sind. Die Bodenplatten können auch durch das erwähnte Segeltuchmaterial ausgebildet werden.

Es fördert ebenfalls die Lösung der Erfindungsaufgabe, wenn die Laufräder an Steckachsen lösbar am Rahmen befestigt sind.

Die Erfindung wird im folgenden anhand von Ausführungsbeispielen näher erläutert, aus denen sich weitere wichtige Merkmale ergeben. Es zeigt:

Fig. 1 bis 9 Einzelheiten einer ersten Ausführungsform des neuartigen Anhängers, ohne Behälter, und zwar

Fig. 1      eine Draufsicht auf die linke Hälfte des Anhängers mit abgebrochener Zugdeichsel;

Fig. 2      eine Seitenansicht von Fig. 1;

Fig. 3      ein Detail des Rahmens nach Fig. 1 und 2;

Fig. 4      ein Detail der Achse des Laufrades nach Fig. 1 und 2;

Fig. 5      ein Lagerbolzen;

Fig. 6      den Lagerbolzen von Fig. 5 in Stirnansicht;

Fig. 7      zeigt eine Anschweißlasche;

Fig. 8      einen Schnitt der Arretierung von Lagerbolzen und Lagerrohren;

Fig. 9      einen Schnitt des Lagerrohres mit Nute und des Lagerbolzens mit Stift;

Fig. 10     eine Seitenansicht einer weiteren Ausführungsform des neuartigen Anhängers mit aus Kunststoffteilen bestehendem Behälter;

Fig. 11        eine Seitenansicht entsprechend Fig. 10, wobei anstelle des Kunststoffbehälters ein Segeltuchbehälter vorgesehen ist;

Fig. 12        den Anhänger nach Fig. 10 und 11 ohne Behälter in einer teilweise zusammengeklappten Lage beim Parken des Anhängers mit angedeutetem Fahrrad;

Fig. 13        den Anhänger nach Fig. 10 bis 12 in gänzlich zusammengeklappter Lage zum Abstellen oder Transport;

Fig. 14 bis 17 eine weitere Ausführungsform des Anhängers, und zwar

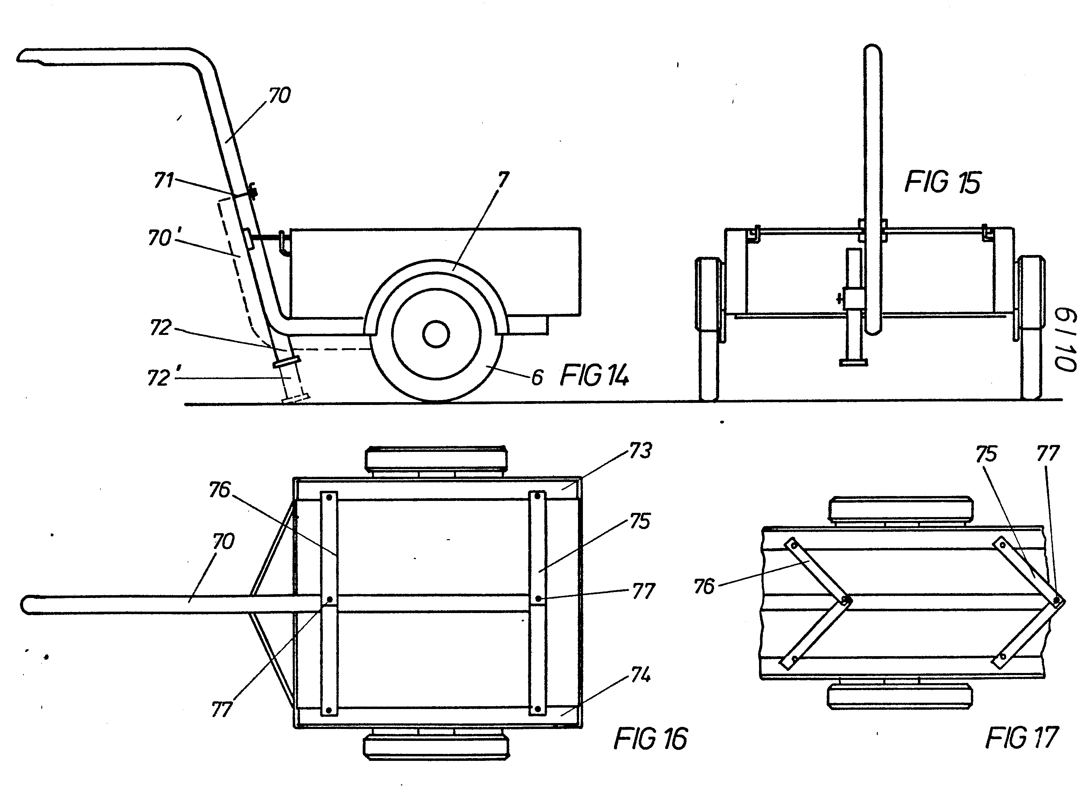

Fig. 14        eine Seitenansicht des Anhängers;

Fig. 15        eine Vorderansicht des Anhängers;

Fig. 16        eine Draufsicht auf den Anhänger und

Fig. 17        eine Draufsicht auf den Anhänger in teilweise zusammengeklapptem Zustand;

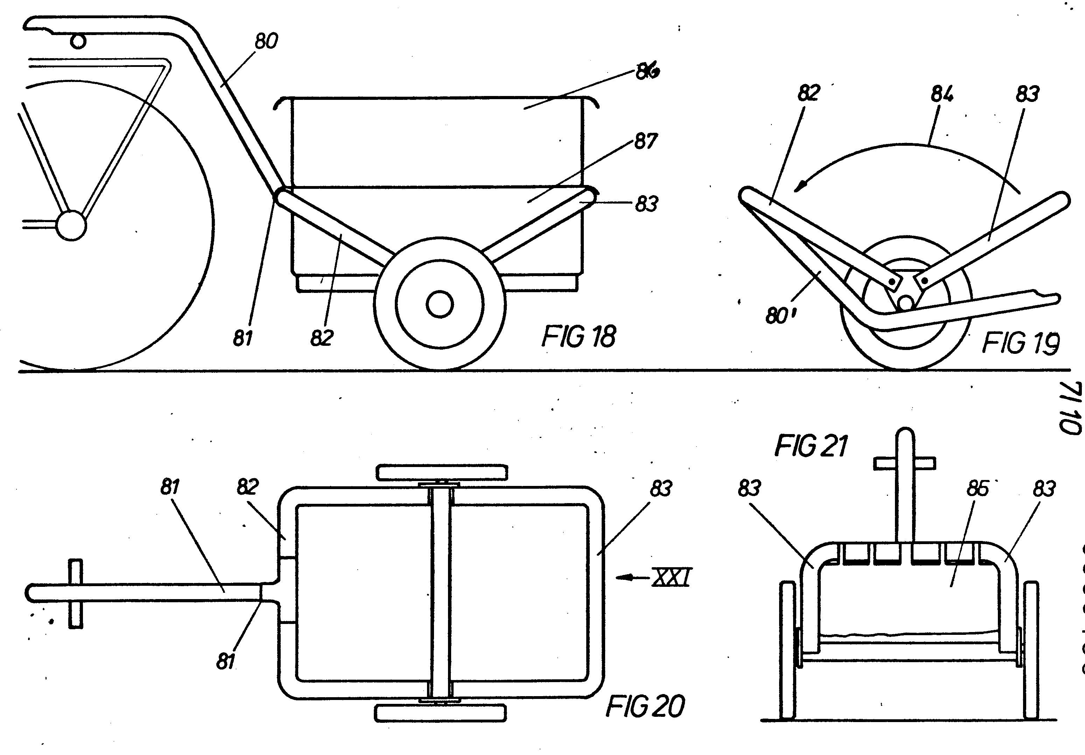

Fig. 18 bis 21 eine weitere Ausführungsform des neuartigen Anhängers, und zwar

Fig. 18        eine Seitenansicht des Anhängers mit angedeutetem Fahrrad;

Fig. 19        den eigentlichen Anhänger in zusammengeklapptem Zustand ohne Behälter;

Fig. 20          eine Draufsicht auf Fig. 18 ohne Behälter
                 und

Fig. 21          eine Vorderansicht des zusammengeklappten
                 Anhängers nach Fig. 19;

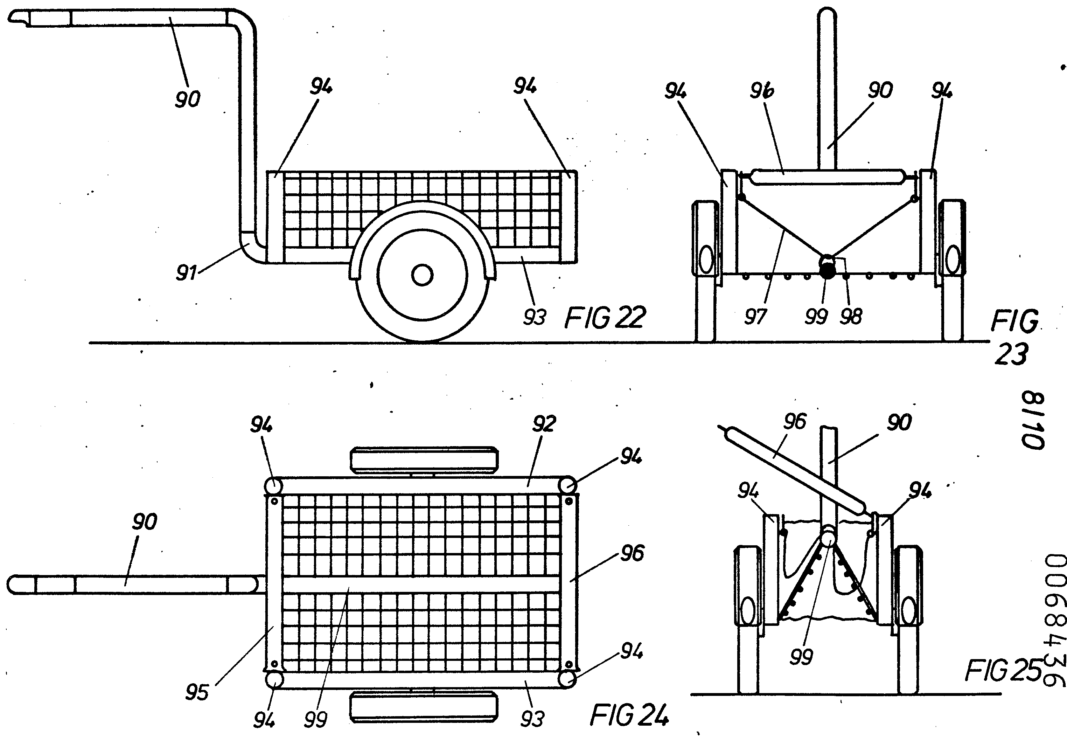

Fig. 22 bis 25 eine andere Ausführungsform des neuartigen Anhängers, und zwar

Fig. 22          eine Seitenansicht;

Fig. 23          eine Rückansicht;

Fig. 24          eine Draufsicht und

Fig. 25          eine Ansicht entsprechend Fig. 23 in zusammengeklapptem Zustand des Anhängers;

Fig. 25 bis 29 eine weitere Ausführungsform des neuartigen Anhängers, und zwar

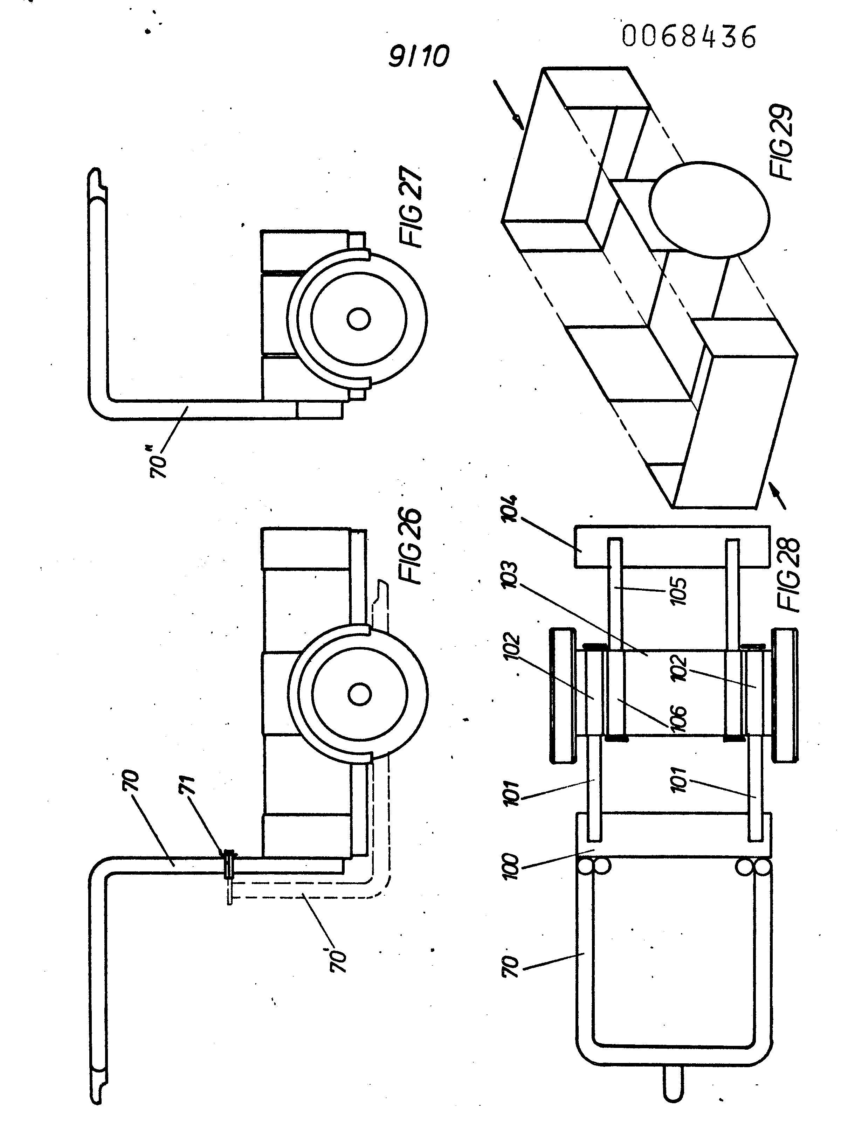

Fig. 26          eine Seitenansicht;

Fig. 27          ebenfalls eine Seitenansicht in zusammengeklapptem Zustand mit den Grund-Behälterteilen und nach hinten geklappter Deichsel;

Fig. 28          eine Draufsicht auf Fig. 26 und

Fig. 29          perspektivisch eine Ansicht des Behälters;

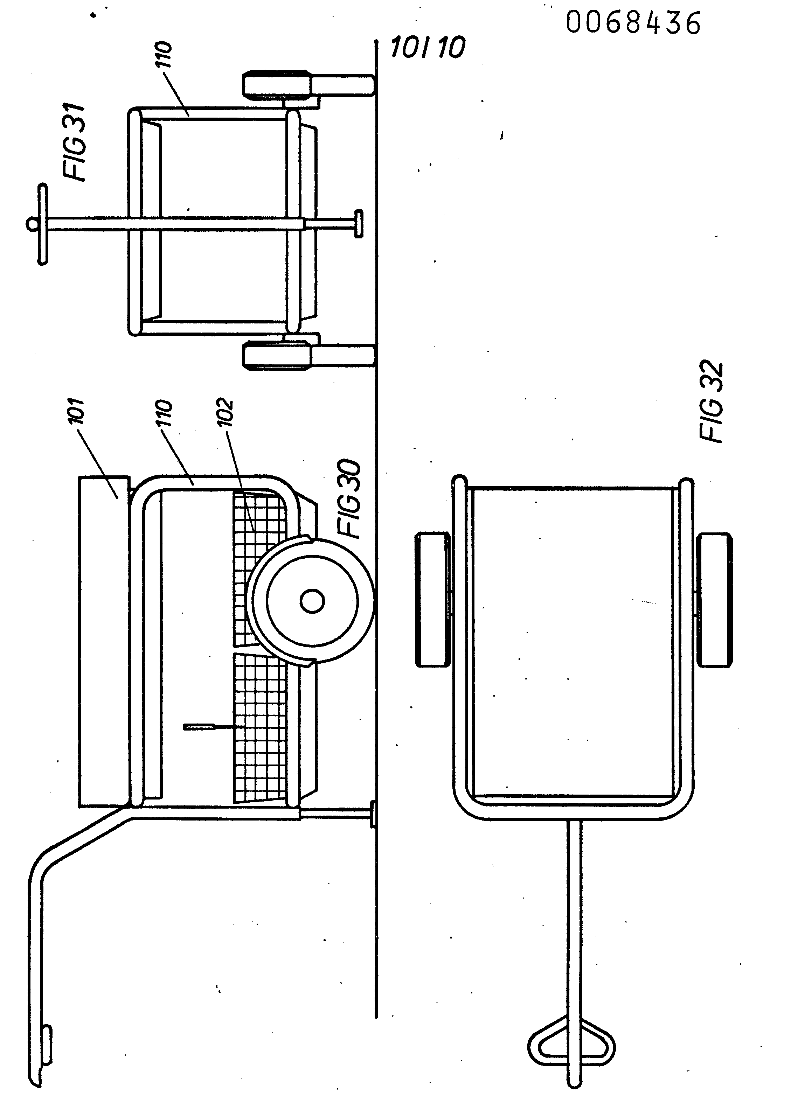

Fig. 30 bis 32 eine weitere Ausführungsform des neuartigen Anhängers, und zwar

Fig. 30          eine Seitenansicht;

Fig. 31          eine Vordersnsicht und

Fig. 32        eine Draufsicht auf den Anhänger.

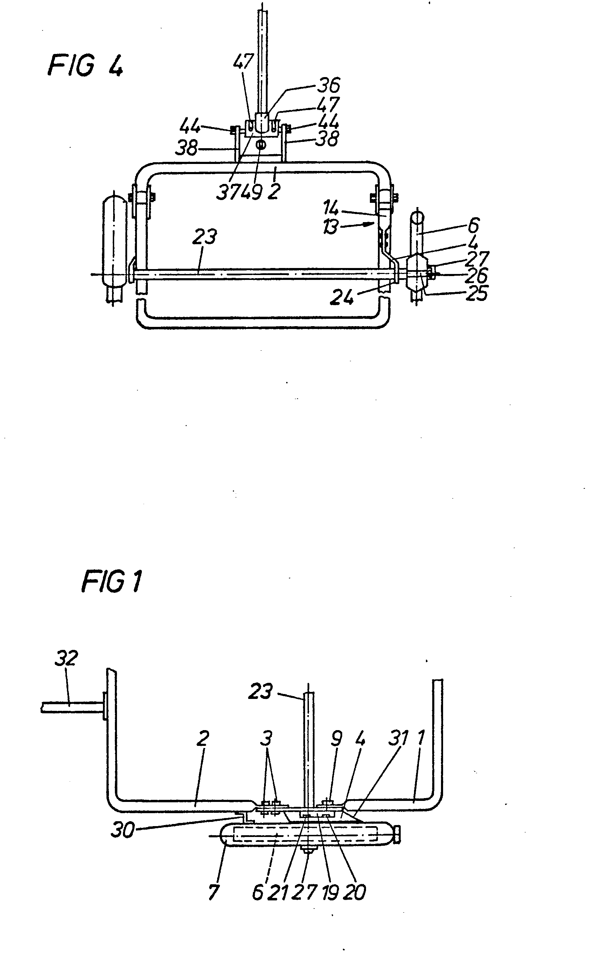

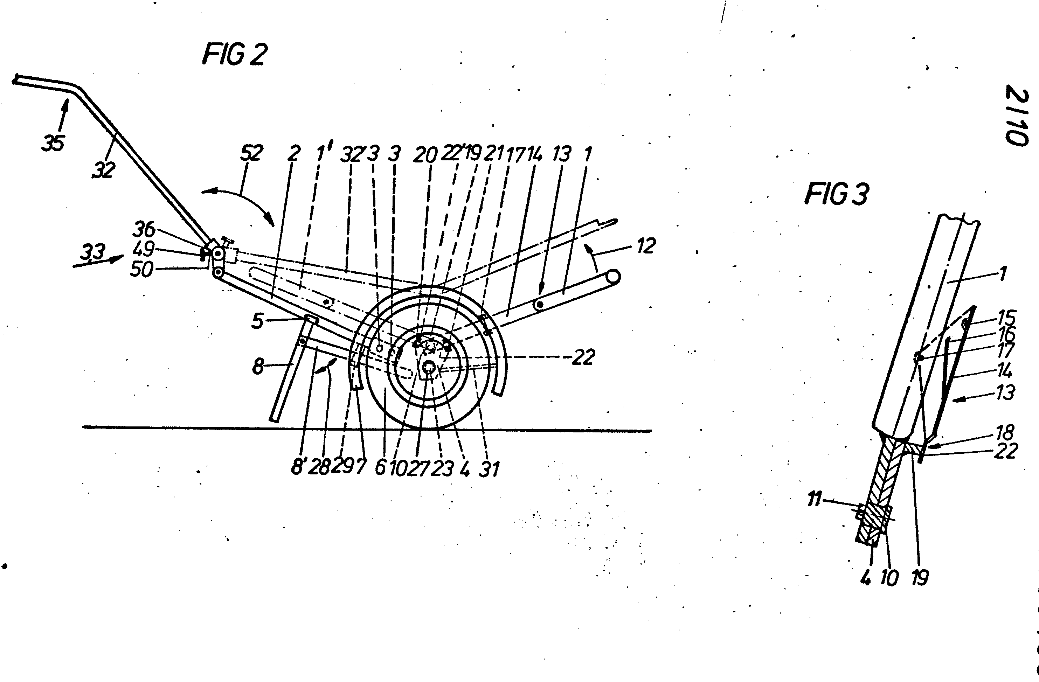

In Fig. 1 besteht ein Rahmen eines Anhängers aus einem ersten U-förmig profilierten Rundrohr-Bügel 1, der am Traggestell 4 befestigt ist. Der Bügel 1 ist schwenkbar gestaltet, und zwar ist dies in Fig. 2 ersichtlich. Der Bügel 1 ist in einem Schwenklager 9 am Traggestell 4 schwenkbar gelagert. Das Schwenklager besteht aus einem Bolzen 10, der seitlich die Lagerplatte 4 durchgreift und schwenkbar auf dem Bolzen 10 gelagert ist. Der gesamte Bügel 1 kann nun in Pfeilrichtung 12 nach innen geschwenkt werden und nimmt dann die in Fig. 2 gezeigte eingeschwenkte Stellung 1' ein.

Zur Arretierung der Schwenklage des Bügels 1, 1' ist eine Schwenkarretierung 13 vorgesehen, die aus einem Bügel 14 besteht, der am vorderen Ende eine Eingriffmulde 15 aufweist. Der Bügel 14 stützt sich mit einer Blattfeder 16 am Außenumfang des Bügels 1 ab. Der Bügel 14 ist im Schwenklager 17 schwenkbar gelagert. Das Schwenklager 17 besteht aus einem nicht näher dargestellten Bolzen und einer Mutter.

Am anderen der Eingriffmulde 15 gegenüberliegenden Ende ist eine Rastarretierung 18 vorgesehen. Die Rastarretierung besteht aus einem aufgeschweißten bogenförmigen Segment 19, wie sich aus den Fig. 1 und 2 erkennen läßt, das an den beiden auseinanderliegenden Punkten Rastausnehmungen 20,21 aufweist.

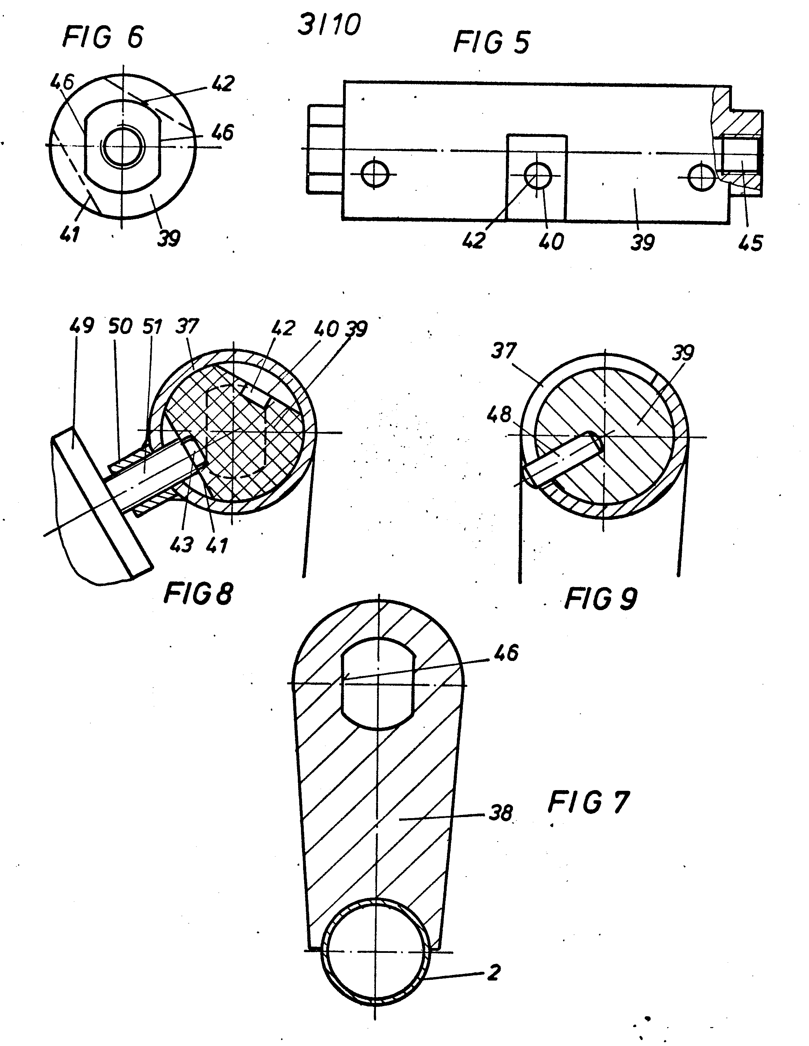

In Fig. 2 sieht man auch die beiden Rastarretierungen 20,21, wobei ersichtlich ist, daß der Bügel 14 am vorderen freien Ende eine Rastnase 22 aufweist, die in die Rastausnehmungen 20,21 einklinkt. Diese Rastnase ist auch in Fig. 3 sichtbar. In der umgeschwenkten Stellung sieht man die Rastnase in ihrer Stellung 22'. Die Schwenkarretierung 13 dient dazu, daß im ausgeschwenkten Zustand des Bügels 1 das eingehängte Segeltuch den Bügel 1 nicht in Pfeilrichtung 12 nach vorne schwenkt. Umgekehrt in der gestrichelten Lage soll die Schwenkarretierung 13 verhindern, daß der einmal eingeschwenkte Bügel in seiner Stellung 1' nicht mehr unbeabsichtigt in seine ausgeschwenkte Lage gerät.

Die Lagerplatte 4 dient zur Halterung des Verbindungsrohres 23, das die beiden Achsen miteinander verbindet. Das Verbindungsrohr 23 ist beiderseits mittels Schweißverbindungen 24 an der Lagerplatte befestigt. Die Lagerung des Rades 6 erfolgt über einen Radbolzen 25, der einseitig an der Stirnseite des Verbindungsrohres 23 jeweils angeschweißt ist. Auf den Radbolzen 25 ist das Rad 6 mittels Kugellager gesteckt. Stirnseitig wird das Rad 6 gesichert mit einer Sicherungsmutter 26, die mit einer Abdeckkappe 27 abgedeckt wird. Der vordere Teil des Tragrahmens des Fahrradanhängers wird von einem U-förmig profilierten Bügel 2 gebildet, der aus einem Rundprofil besteht. Dieser Bügel ist mittels Schraubverbindungen 3 an der Tragplatte seitlich befestigt. Am unteren Teil des Bügels 2 ist ein Stützblech 5 angeschweißt, an dem schwenkbar der Stützfuß 8 angesetzt ist. Der Stützfuß 8 dient zur Aufstellung des Fahrradanhängers, wenn er nicht am Fahrrad angehängt ist.

Er ist in Pfeilrichtung 28 nach innen einschwenkbar und nimmt dann seine Stellung 8' ein.

Der Stützfuß 8 wird mittels einer C-förmigen Klammer 29 in seiner eingeschwenkten Stellung 8' gehalten. Seitlich am Bügel 2 ist über ein Halteblech 30 das Schutzblech 7 befestigt. Der hintere Teil des Schutzblechs 7 ist über ein weiteres Halteblech 31 mit der Lagerplatte 4 verbunden.

Das Deichselrohr 32 ist ebenfalls schwenkbar in einem feststellbaren Schwenklager 33 am vorderen freien Ende des Bügels 2 befestigt. Das Deichselrohr ist abgekröpft und weist eine vordere Kupplung zum Anhängen an der Fahrradkupplung an einem Fahrrad auf.

In einer weiteren nicht näher dargestellten Ausführungsform ist es vorgesehen, daß ein zweites Schwenklager 35 vorgesehen ist, mit dem die Deichsel in ihrer Mitte noch einmal geknickt und zusammengefaltet werden kann. Dieses Schwenklager befindet sich bei Pos. 35.

Im gezeigten Ausführungsbeispiel ist aber nur ein einziges Schwenklager 33 vorhanden.

Das Schwenklager 33 besteht aus einer Haltemuffe 36, die das Deichselrohr umgibt. Die Haltemuffe 36 ist mit ihrem unteren freien Ende mit einem Lagerrohr 37 verbunden, wobei das Lagerrohr drehbar zwischen Anschweißlaschen 38 gehalten ist.

Der Lagerbolzen 39 ist in den Fig. 5 und 6 im Detail dargestellt. Er besteht aus einem runden Bolzen, der an einer Seite eine Abflachung 40 aufweist. Auf der gegenüberliegenden Seite ist eine weitere Abflachung 41 angeordnet. Jeder Abflachung 40,41 ist ein Sackloch 42,43 zugeordnet. Der Lagerbolzen 39 ist starr über die Laschen 38 und zugeordnete Befestigungsschrauben 44, die in zugeordnete Gewindebohrungen 45 eingreifen, mit dem U-Bügel verbunden.

Der Lagerbolzen 39 greift formschlüssig über Abflachungen 46 in die Laschen 38 ein, das Profil der Laschen 38 des Eingriffprofils ist in Fig. 7 oben gezeichnet. Es ist ein etwa oval profilierter Eingriff.

Am Außenumfang des Lagerrohrs 37 sind radiale Nuten 47 angeordnet, in die Stifte 48 eingreifen, die fest mit dem Lagerbolzen 39 verbunden sind.

Die Stifte 48 in Verbindung mit den Nuten 47 dienen zur axialen Führung des Lagerrohres 37 auf dem Lagerbolzen 39.

Es ist eine Feststellschraube 49 vorhanden, die in einer Gewindebohrung 50 am Lagerrohr 37 gehalten wird. Der Schaft 51 der Feststellschraube 49 weist einen zylindrischen Ansatz auf, der formschlüssig in das Sackloch 42 oder 43 eingreift.

In der gezeichneten Eingriffsstellung gemäß Fig. 8 ist das Deichselrohr 32 ausgeklappt, d.h. in der Stellung der Fig. 1 oder 2, während in der gestrichelten Darstellung in Fig. 2 die Feststellschraube 49 eingeklappt ist. Das Deichselrohr 32 kann somit in den Pfeilrichtungen 52 einwärts und auswärts geschwenkt werden. Der Benutzer löst nun die Feststellschraube 49 oder Verzahnung (wie Pos. 35), verschwenkt die Deichsel in Pfeilrichtung 52 nach hinten, so daß sie die eingeschwenkte Stellung 32' einnimmt.

Die Deichsel ragt dann nach hinten, wie es in Fig. 2 angegeben ist. Wenn in der nicht näher dargestellten Ausführungsform ein zweites Schwenklager 35 vorgesehen ist, wird die Deichsel dann noch einmal nach innen gefaltet und ragt nicht mehr nach hinten.

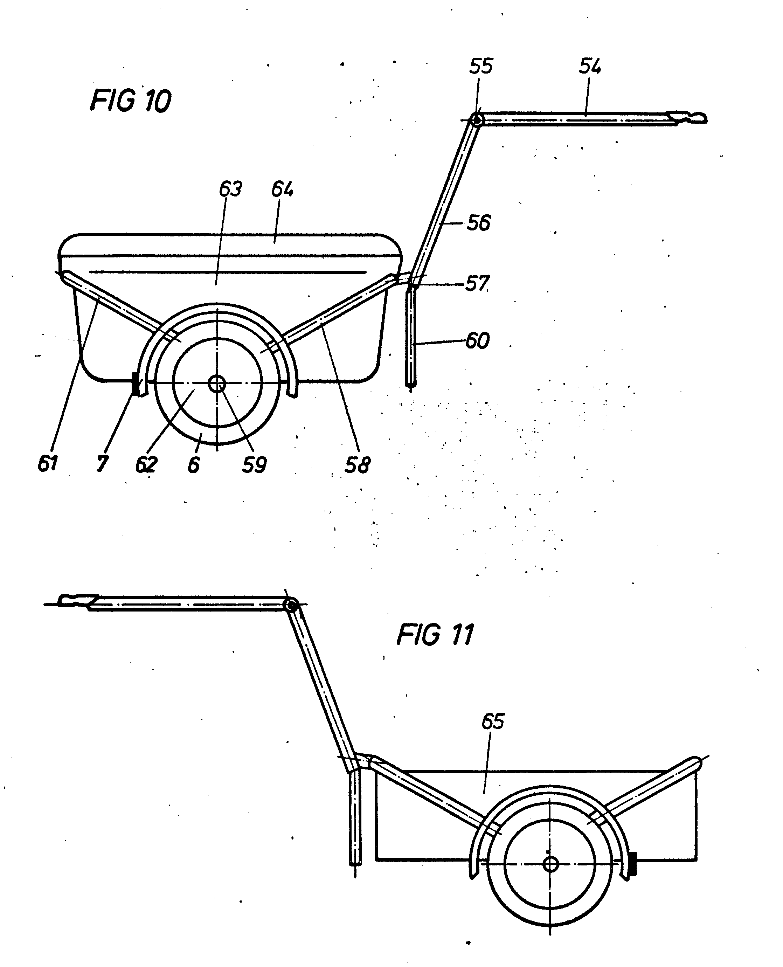

Der Anhänger nach Fig. 10 weist ein Deichselrohr 54 auf, das im Schwenklager 55 an einem zweiten Deichselrohr 56 schwenkbar gelagert ist. Die Deichsel ist also geteilt und besteht aus den zwei Deichselrohren 54,56, die durch das Schwenklager 55 schwenkbar miteinander verbunden sind.

Das zweite Deichselrohr 56 ist in dem Schwenklager 57 schwenkbar an einem vorderen Bügel 58 gelagert, der fest an einer nicht näher dargestellten Lagerplatte 59 befestigt ist. Ferner ist ein Stützfuß 60 vorhanden, der entweder in das Deichselrohr 56 teleskopierbar einschiebbar ist oder der auch in einer anderen Ausführungsform schwenkbar gelagert ist.

Der hintere Bügel 61 ist schwenkbar in einem nicht näher dargestellten Schwenklager 62 an der Lagerplatte 59 gelagert. Die anderen Teile sind gleich wie z.B. das Schutzblech 7 und das Rad 6.

Der gesamte Fahrradanhänger nimmt eine Behälterwanne 63 auf, die in einem bevorzugten Ausführungsbeispiel aus einem Kunststoff-Tiefziehteil gebildet ist. Die Behälterwanne wird oben durch einen Deckel abgedeckt, der Deckel heißt 64, und ist mittels eines Schlosses verschließbar.

Fig. 11 zeigt die gleiche Ausführung wie Fig. 10 mit den gleichen Teilen, nur daß statt der Behälterwanne 63 und des Deckels 64 ein Segeltuchbehälter 65 eingehängt ist.

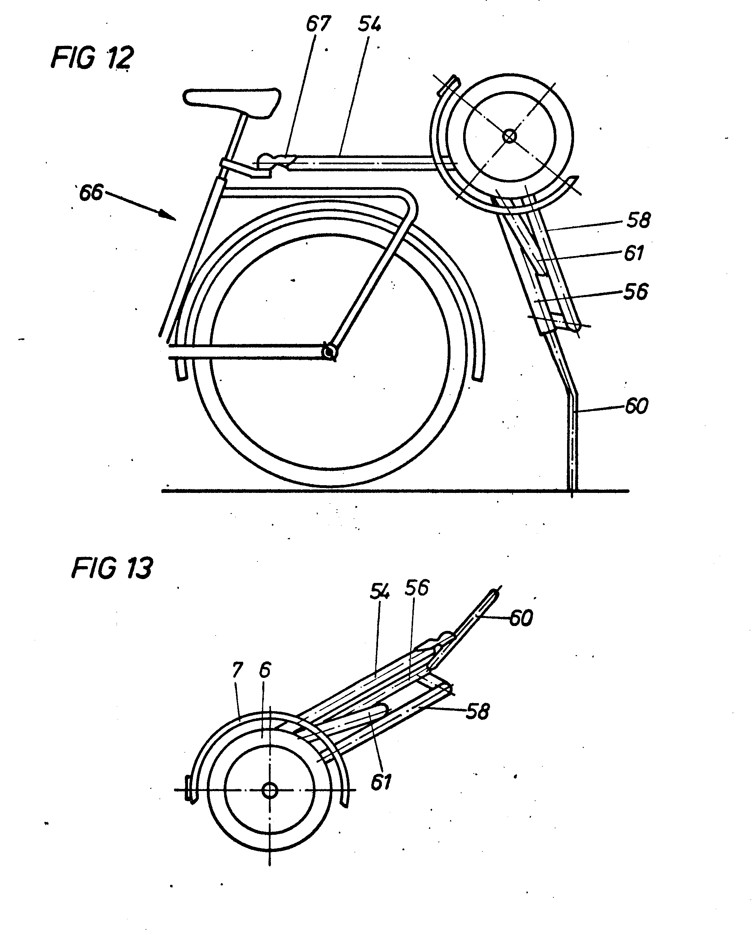

Fig. 12 zeigt, wie der gesamte Fahrradanhänger eingeklappt an einem Fahrrad 66 befestigt werden kann. Das vordere Deichselrohr 54 bleibt hierbei an der Anhängekupplung 67 eingehängt und man sieht, daß das untere Deichselrohr 56 mit dem verlängerten Stützfuß 60 die Bodenabstützung bildet, während der hintere Bügel 61 eingeklappt ist, ebenso der vordere Bügel 58.

Man sieht an der Zeichnung Fig. 12, daß der gesamte Fahrradanhänger sehr wenig Platz wegnimmt und auch sehr einfach zusammenzufalten ist.

Besonders günstig ist hier die günstige Gewichtsabstützung über das Deichselrohr 54, das hintere Deichselrohr 56 und den Stützfuß 60. Dadurch, daß der Stützfuß 60 teleskopierbar im hinteren Deichselrohr 56 gehalten ist, kann der Bodenabstand beliebig gewählt werden.

Fig. 13 zeigt den vollkommen zusammengeklappten Fahrradanhänger, wo ersichtlich ist, daß das gesamte Teil sehr raumsparend zusammengeklappt werden kann und beispielsweise in einem Kofferraum oder einem sonstigen Behälter transportiert werden kann.

Zusätzlich kann noch das Rad abgezogen werden, indem die Sicherungsmutter 26 gelöst wird, nach vorheriger Entfernung der Abdeckkappe 27, und das Rad 26 kann dann abgezogen werden, so daß der ganze Aufbau noch kleiner wird.

Die Fig. 14 bis 17 zeigen die weitere Ausführungsform eines Fahrradanhängers, der zusammenklappbar ist. Er besteht dabei aus einem Deichselrohr 70, das mittels eines Scharniers einklappbar ist, und zwar in der gestrichelten Stellung 70'. Ferner ist der Stützfuß 72 teleskopierbar, der Boden des Fahrradanhängers wird aus zwei parallelen, im Abstand voneinander angeordneten Seitenträgern 73,74 definiert, wo später noch die Bodenplane aufgelegt werden kann.

Die Seitenträger 73,74 sind über zusammenklappbare Scherenarme 75,76 miteinander verbunden, die jeweils an Schwenklagern 77 am Deichselrohr 70 gelagert sind. Gemäß Fig. 17 kann der gesamte Anhänger dann in der Breite zusammengefaltet werden, so daß er beispielsweise von einer Gebrauchsbreite von 1 Meter auf eine zusammengefaltete Breite von 20 cm zusammengefaltet werden kann.

Die Fig. 18 bis 21 zeigen die weitere Ausführungsform eines Fahrradanhängers, der mittels U-förmig profilierter Rohre zusammenfaltbar ist. Er besteht aus dem vorderen Deichselrohr 80, das an einem Schwenklager 81, an einem vorderen ortsfesten Bügel 82 befestigt ist. Die Deichsel 80 kann in die Stellung 80' eingeschwenkt werden, und der hintere Bügel 83 kann in Pfeilrichtung 84 nach vorne geklappt werden.

Fig. 21 zeigt, daß der Segeltuchbehälter 85 an entsprechenden Einhängelaschen an den Bügeln 82,83 einhängbar ist.

Anstelle des Segeltuchbehälters 85 können Stapelbehälter 86,87 gemäß Fig. 18 aufgesetzt werden. Die Fig. 22 bis 25 zeigen eine weitere Ausführungsform mit einem vorderen Deichselrohr 90, das abnehmbar und zerlegbar ist. Beispielsweise ist das Deichselrohr 90 in eine vordere Muffe 91 eingesteckt und kann dort herausgezogen werden. Ebenso kann der vordere Teil noch zerlegt werden.

Der Fahrradanhänger besteht aus zwei parallel im Abstand voneinander angeordneten Längsrohren 92,93, die an entsprechenden Tragplatten fest mit den Achsen der Räder verbunden sind.

An den Längsrohren sind aufstrebende Halterohre 94 angeordnet. Die Halterohre sind pfostenartig an jeweils der Ecke des Kastens angeordnet. Die Halterohre 94 werden durch Querstreben 95,96 auseinandergehalten, wobei die Querstreben gemäß Fig. 25 abnehmbar sind.

Zur Straffung ist ein Seilzug 97 vorgesehen, der an einem Halterohr 94 befestigt ist und durch eine untere bodenseitige Öse 98 durchläuft. Die Öse 98 ist an einem Bodenrohr 99 befestigt, das längs durch den Anhänger hindurchgeht und eine Fortsetzung des Deichselrohres in der Muffe 91 bildet. Der Seilzug 97 dient zum Verspannen der Halterohre gegeneinander mit dem Bodenrohr 99 und gibt dem gesamten Fahrzeug die Stabilität. Dieses Fahrzeug kann ebenfalls von einer Breite von 1 Meter auf eine Breite von 20 cm etwa zusammengefaltet werden.

Die Fig. 26 bis 29 zeigen ein weiteres Ausführungsbeispiel eines Fahrradanhängers, wo ersichtlich ist, daß eine Deichsel 70 wiederum im Scharnier 71 schwenkbar ist und in die Lage 70' herabgeschwenkt werden kann.

Der Fahrradanhänger weist eine vordere Quertraverse 100 auf, an der die Deichsel 70 befestigt ist. Die Quertraverse 100 ist über Schieberohre 101 in zugeordneten Aufnahmemuffen 102 am Tragrahmen 103 gelagert.

Die Schieberohre 101 sind in den Aufnahmemuffen 102 teleskopierbar.

Ferner ist eine hintere Quertraverse 104 vorhanden, die ebenfalls über Schieberohre 105 in Aufnahmemuffen 106 teleskopierbar ist. Der ganze Anhänger kann damit in der Länge verlängert oder verkürzt werden.

Ebenso ist nach Fig. 27 sichtbar, daß die Deichsel 70" statt klappbar auch schwenkbar ausgebildet sein kann.

Fig. 29 zeigt, daß der Anhänger kastenförmige Teile aufweisen kann, die durch Auseinanderziehen Zwischenräume bilden. Diese Zwischenräume können durch Segeltuch oder andere zusammenklappbare Bodenteile ausgefüllt werden.

Die Fig. 30 bis 32 zeigen einen Anhänger mit einem rohrförmigen Rahmen 110, der in der Seitenansicht etwa U-förmig profiliert ist und eine obere Ladeebene 101 und eine untere Ladeebene 102 bildet. Die obere Ladeebene weist z.B. einen kastenförmigen Aufsatz auf, während die untere Ladeebene einen gitterförmigen Einsatz aufweisen

0068436

könnte. Ebenso kann in die obere Ladeebene eine Kunststoffwanne und in die untere Ladeebene eine zweite Kunststoffwanne eingehängt werden (vgl. Ausführungsbeispiel nach Fig. 10 mit Behälterwanne 63). Wenn die obere Kunststoffwanne entfernt wird, können mit der unteren Kunststoffwanne besonders hohe Gegenstände transportiert werden, weil das obere horizontal umlaufende Rahmenrohr dann als Abstützung für den Gegenstand dient.

Dieser Fahrradanhänger ist beispielsweise auch als Partywagen oder als Gartenwagen geeignet, weil er sehr leicht zu beladen ist und eine große Ladefläche aufweist. Er ist starr oder klappbar ausgebildet.

Durch die Anordnung verschiedener Einsätze ergibt sich eine universelle Anwendbarkeit; man kann diesen Anhänger beispielsweise auch als Werkstattwagen o. dgl. ausrüsten.

0068436

Patentansprüche
--------------------------------

1. Anhänger für Zweiradfahrzeuge, insbesondere Fahrräder, bestehend aus einem aus Rohren gefertigten Rahmen, an dem nebeneinander zwei Laufräder befestigt sind, ferner mit einer mittig angeordneten Zugdeichsel und mit einem mit dem Rahmen lösbar verbindbaren Behälter, dadurch gekennzeichnet , daß der Rahmen als Klapprahmen ausgebildet ist, der um Achsen klappbar ist, die parallel zu den Achsen der Laufräder verlaufen oder senkrecht dazu, und der in seiner Gebrauchslage und in seiner Klapplage arretiert ist.

2. Anhänger nach Anspruch 1, dadurch gekennzeichnet , daß die Verbindung zwischen der Zugdeichsel (54) und dem Rahmen als Gelenk (57) ausgebildet ist.

3. Anhänger nach Anspruch 2, dadurch gekennzeichnet , daß das Gestell durch U-förmig gebogene Rohre (58,61) gebildet ist, die im Bereich der Achsen der Laufräder (6) gelenkig gehalten sind.

4. Anhänger nach Anspruch 1 bis 3, dadurch gekennzeichnet , daß die Zugdeichsel (54,56) nach unten als teleskopierbarer, schwenkbarer Stützfuß (60) verlängert ist.

5. Anhänger nach den Ansprüchen 1 bis 4, dadurch gekennzeichnet , daß die Zugdeichsel (70) unterteilt schwenkbar oder steckbar ist.

6. Anhänger nach Anspruch 1,
d a d u r c h   g e k e n n z e i c h n e t , daß die
Zugdeichsel (70) als Mittelträger fortgesetzt ist, an
den vordere und hintere, sich seitlich erstreckende
Scherenarme (75,76) mit lotrechten Schwenkachsen (77)
angelenkt sind.

7. Anhänger nach Anspruch 1,
d a d u r c h   g e k e n n z e i c h n e t , daß die
Zugdeichsel (90) als Mittelträger (99) fortgesetzt ist,
an den rechte und linke Bodenplatten schwenkbar angelenkt sind.

8. Anhänger nach Anspruch 1,
d a d u r c h   g e k e n n z e i c h n e t , daß der
Behälter durch kastenförmige Teile gebildet ist, die
durch Zwischenwände ergänzbar sind.

9. Anhänger nach Anspruch 1,
d a d u r c h   g e k e n n z e i c h n e t , daß das
Gestell in einer Seitenansicht U-förmig ist.

10. Anhänger nach den Ansprüchen 1 bis 8,
d a d u r c h   g e k e n n z e i c h n e t , daß der
Behälter als Segeltuchbehälter (65) ausgebildet ist,
der in den Rahmen eingehängt ist.

11. Anhänger nach den Ansprüchen 1 bis 8,
d a d u r c h   g e k e n n z e i c h n e t , daß der
Behälter aus einem in den Rahmen eingehängten Kasten
(63,64) besteht.

12. Anhänger nach den Ansprüchen 1 bis 11,
d a d u r c h   g e k e n n z e i c h n e t , daß die
Laufräder (6) an Steckachsen lösbar am Rahmen befestigt
sind.

1/10

FIG 4

FIG 1

2110

0068436

FIG 3

FIG 2

FIG 6

3110

FIG 5

FIG 8

FIG 9

FIG 7

FIG 10

FIG 11

**51 10**

**FIG 12**

67  54

66

58

61

56

60

**FIG 13**

54  56

60

7  6

58

61

FIG 15

6 / 10

FIG 14

6

7

70

71

70'

72

72'

FIG 17

77

75

76

FIG 16

73

75

77

74

76

70

77

0068436

FIG 19

FIG 18

FIG 20

FIG 21

71 10

80 81 82 83 84 85 86 87 80' XXI

8110

0068436

FIG 23

FIG 25b

FIG 22

FIG 24

9110

0068436

FIG 27

FIG 26

FIG 28

FIG 29

0068436

FIG 31

FIG 30

FIG 32

10110

101
110
102